# EUROPÄISCHE PATENTSCHRIFT

(11) **EP 2 152 974 B1**
(45) Veröffentlichungstag und Bekanntmachung des Hinweises auf die Patenterteilung: **12.07.2017**
(21) Anmeldenummer: 08747908.5
(22) Anmeldetag: 30.05.2008
(51) Int. Cl.: E02F 3/36

(54) **KUPPLUNG FÜR ARBEITSMASCHINEN**
COUPLING FOR MACHINE TOOLS
ACCOUPLEMENT POUR MACHINES DE TRAVAIL

(30) Priorität: 13.06.2007 AT 9222007
(43) Veröffentlichungstag der Anmeldung: 17.02.2010
(73) Patentinhaber: Martin GmbH, 6751 Braz (AT)
(72) Erfinder: MARTIN, Dietmar, A-6751 Braz (AT); VEITH, Andreas, A-6824 Schlins (AT)
(74) Vertreter: Hasler, Erich
(86) Internationale Anmeldenummer: PCT/AT2008/000187
(87) Internationale Veröffentlichungsnummer: WO 2008/151334

(56) Entgegenhaltungen:
- EP-A- 0 963 688
- WO-A-2004/072387
- DE-A1-102004 004 332
- DE-T2- 60 102 711

## Beschreibung

Die vorliegende Erfindung betrifft eine Kupplung für Arbeitsmaschinen mit einem ersten Hauptkupplungsteil und zumindest einem weiteren Hauptkupplungsteil zur mechanischen Befestigung eines Anbaugerätes an der Arbeitsmaschine, wobei für eine Energieversorgung des Anbaugerätes am ersten Hauptkupplungsteil ein erster Energiekupplungsteil und am weiteren Hauptkupplungsteil zumindest ein weiterer Energiekupplungsteil vorgesehen ist und an einem der Hauptkupplungsteile ein Aktuator angeordnet ist, welcher zur Betätigung einer Verriegelungseinrichtung zur Verriegelung der beiden Hauptkupplungsteile miteinander vorgesehen ist, wobei eine Verbindungseinrichtung zum automatisierten Verbinden der Energiekupplungsteile vorgesehen ist und die Verbindungseinrichtung für die Energiekupplungsteile zumindest einen, vorzugsweise linear verschiebbaren, Schiebekeil aufweist, welcher mit einer Keilfläche die Energiekupplungsteile zum Verbinden aufeinanderschiebt, wobei die Energiekupplungsteile jeweils zumindest eine Energiekupplungsplatte aufweisen, wobei an den Energiekupplungsplatten jeweils miteinander in Eingriff bringbare weibliche und männliche Energiekupplungselemente angeordnet sind. Darüber hinaus betrifft die Erfindung auch eine Arbeitsmaschine mit einer erfindungsgemäßen Kupplung.

Gattungsgemäße Kupplungen werden insbesondere bei schweren Arbeitsmaschinen, wie Baggern, Raupen oder Landwirtschaftsgeräten verwendet, an denen Anbaugeräte wie Baggerschaufeln bzw. -löffel, Hammer, Rüttelplatten u. dgl. befestigt werden müssen, wobei an den Anbaugeräten Aktuatoren vorgesehen sind, die mit Energie zu versorgen sind. Häufig handelt es sich bei dieser Energieversorgung um Hydraulikleitungen. Manchmal sind aber auch andere Energieversorgungen wie z. B. elektrische Kabel oder pneumatische Leitungen mittels der Energiekupplungsteile zu verbinden. Meist werden die Anbaugeräte mit einem beweglichen Arm der Arbeitsmaschine verbunden.

Beim Stand der Technik ist es bekannt, die beiden Hauptkupplungsteile über eine Schwenkbewegung in eine Verriegelungsstellung zu bringen, in der dann über einen Aktuator, welcher an einem der Hauptkupplungsteile angebracht ist, eine Verriegelungseinrichtung in die Schließstellung gebracht wird, wodurch die mechanische Verbindung der Hauptkupplungsteile und damit des Anbaugerätes an der Arbeitsmaschine vollzogen ist. Um die Energiekupplungsteile nicht anschließend per Hand miteinander verbinden zu müssen, ist es ebenfalls bekannt, Verbindungseinrichtungen vorzusehen, die das automatisierte, also nicht von Hand zu vollziehende, Verbinden der Energiekupplungsteile ermöglichen. Diese Verbindungseinrichtungen werden beim Stand der Technik entweder mit eigenen Aktuatoren ausgeführt oder beim Zusammenfügen der Hauptkupplungsteile mittels des Armes der Arbeitsmaschine automatisch in Kontakt gebracht.

Die DE 10 2004 014 824 A1 zeigt eine gattungsgemäße Kupplung bei der die eine Energiekupplungsplatte starr an dem ersten Hauptkupplungsteil befestigt ist und die andere Energiekupplungsplatte unter Verformung von Federgummis schwenkbar am zweiten Hauptkupplungsteil gehalten ist. Bei den Federgummis besteht die Gefahr, dass diese in Folge von Alterung ihre Elastizität einbüßen und die Energiekupplungselemente dann nicht mehr sicher schließen. Die Verriegelungseinrichtung und die Verbindungseinrichtung sind bei dieser Kupplung einstückig in Form eines Verriegelungszapfens ausgebildet.

Die DE 601 02 711 T2 zeigt eine mechanisch aufwendige und auch platzaufwendige gattungsgemäße Lösung mit keilförmigen Kulissenführungen in denen Stifte geführt sind.

Aufgabe der Erfindung ist es, eine platzsparend konstruierte gattungsgemäße Kupplung vorzuschlagen, mit der dauerhaft ein sicheres Verbinden der Energiekupplungsteile gewährleistet wird.

Dies wird erfindungsgemäß erreicht, indem die Keilfläche des Schiebekeils auf eine keilförmig ausgeführte Führungsfläche der Energiekupplungsplatte des ersten Energiekupplungsteiles wirkt und die Energiekupplungsplatte relativ zum ersten Hauptkupplungsteil verschiebt.

Dies ergibt eine besonders zuverlässig und platzsparend realisierbare Art der Kupplung.

Günstigerweise ist dabei vorgesehen, die Verbindungseinrichtung zum automatischen Verbinden der Energiekupplungsteile mit der Verriegelungseinrichtung dahingehend zu Koppeln, dass der Aktuator der Verriegelungseinrichtung zusätzlich bzw. vorzugsweise auch gleichzeitig die Verbindungseinrichtung betätigt und somit das Verriegeln der Hauptkupplungsteile und das Verbinden der Energiekupplungsteile von einem Aktuator in einem Arbeitsschritt erledigt werden kann. Dies ergibt eine einfache Konstruktion mit der sicher und zuverlässig die Energiekupplungsteile gekoppelt werden können, sodass vor allem bei hydraulischen oder pneumatischen Energiekupplungsteilen Leckagen vermieden sind.

Bevorzugte Ausführungsbeispiele sehen vor, dass vor Betätigen der Verriegelungseinrichtung die Hauptkupplungsteile um eine Schwenkachse in eine Verriegelungsstellung aufeinander zu schwenkbar sind, wobei die Hauptkupplungsteile in der Verriegelungsstellung mittels der Verriegelungseinrichtung miteinander verriegelbar sind.

Dies kann z. B. erreicht werden, indem eines der Hauptkupplungsteile zumindest einen Bolzen und das andere der Hauptkupplungsteile eine zum Bolzen korrespondierende Aufnahmeklaue aufweist, wobei bei Lagerung des Bolzens in der Aufnahmeklaue die Hauptkupplungsteile mit dem Bolzen als Schwenkachse in die Verriegelungsstellung aufeinander zu schwenkbar sind.

Die Verriegelungseinrichtung kann z. B. einen vom Aktuator vorzugsweise linear bewegbaren Verriegelungszapfen aufweisen, welcher an einem der Hauptkupplungsteile angeordnet ist und mit einem am anderen Hauptkupplungsteil angeordneten Verriegelungselement in Eingriff bringbar ist. Vorzugsweise handelt es sich dabei um einen formschlüssigen Eingriff der für eine exakte Ausrichtung der Hauptkupplungsteile und damit auch der Energiekupplungsteile sorgt. Als Verriegelungselement kann z. B. eine Verriegelungsaufnahme vorgesehen sein, in die der Verriegelungszapfen einführbar ist. Es sind aber auch Verriegelungselemente wie z. B. weitere Bolzen denkbar, die vom Verriegelungszapfen, vorzugsweise formschlüssig, um- oder hintergriffen werden. Der Aktuator zur Betätigung der Verriegelungseinrichtung und der Verbindungseinrichtung kann hydraulisch und/oder pneumatisch und/oder elektrisch ausgeführt sein. Um ein exaktes und leckagefreies Verbinden der Energiekupplungsteile sicherzustellen, ist günstigerweise eine Führung vorgesehen, die dafür sorgt, dass die Energiekupplungsteile linear aufeinander zu bewegbar gelagert sind.

Weitere Merkmale und Einzelheiten der Erfindung werden anhand eines in den Fig. gezeigten Ausführungsbeispiels beispielhaft erläutert. Dabei zeigt:
- Fig. 1: das Ausführungsbeispiel vor dem Aufeinanderzuschwenken der beiden Hauptkupplungsteile;
- Fig. 2: das Ausführungsbeispiel in der Verriegelungsstellung vor Betätigung des Aktuators und
- Fig. 3: das Ausführungsbeispiel in der endgültig verriegelten Stellung;
- Fig. 4: einen Schnitt durch den Schiebekeil und die Energiekupplungsplatte entlang der Schnittlinie AA.

Die in den Fig. dargestellte Ausführungsvariante zeigt beispielhaft eine Kupplung mit einem ersten Hauptkupplungsteil 1 und einem weiteren Hauptkupplungsteil 2 zur Befestigung des hier in Form eines Baggerlöffels ausgeführten Anbaugerätes 4 am Hydraulikarm 3 der Arbeitsmaschine. Die beiden Hauptkupplungsteile 1, 2 können dabei fix z. B. durch Anschweißen an der Arbeitsmaschine und am Anbaugerät 4 befestigt sein. Günstiger ist es jedoch, wenn die Hauptkupplungsteile 1 und 2 am Anbaugerät 4 und/oder an der Arbeitsmaschine bzw. deren Arm 3 z. B. durch Verschrauben auswechselbar befestigbar sind.

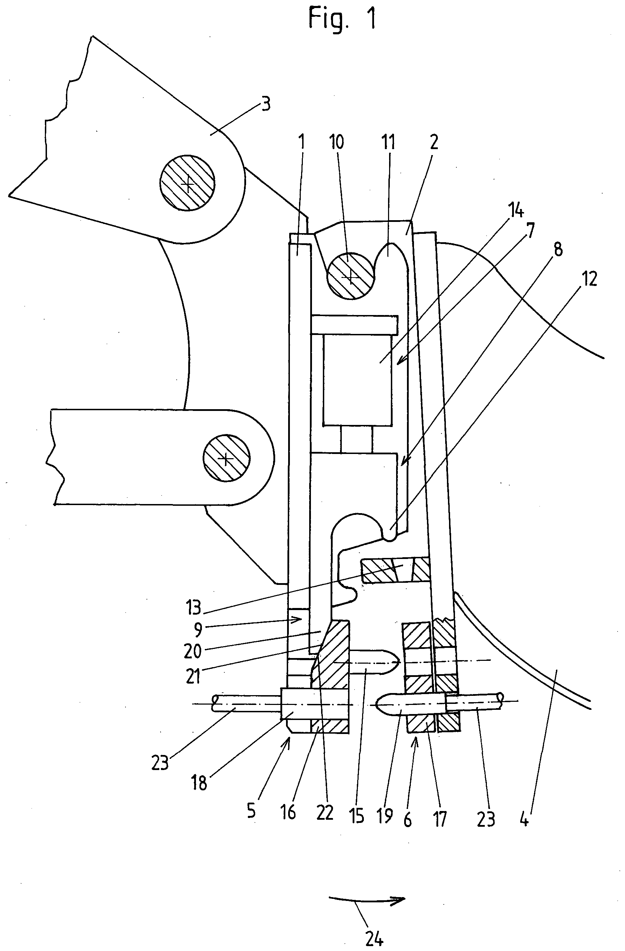

In der in Fig. 1 dargestellten Stellung hintergreift die hier am ersten Hauptkupplungsteil 1 angeordnete Aufnahmeklaue 11 bereits den hier am weiteren Hauptkupplungsteil 2 angeordneten Bolzen 10. Diese Stellung kann zum Einen erreicht werden, indem das Anbaugerät 4 mit seinem Bolzen 10 in die Aufnahmeklaue 11 hineingelegt wird. Vor allem bei schwereren Anbaugeräten wird man aber in der Regel mit Hilfe des Antriebs des Armes 3 den Bolzen 10 des Anbaugerätes 4 entsprechend mit der Aufnahmeklaue 11 hintergreifen.

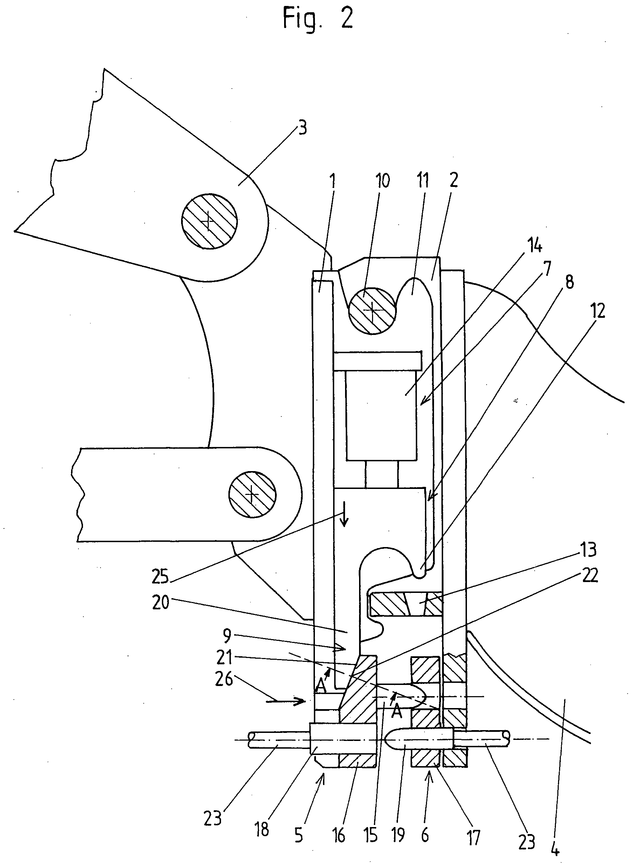

In der in Fig. 1 gezeigten Stellung sind weder der Verriegelungszapfen 12 und die Verriegelungsaufnahme 13 der Verriegelungseinrichtung 8 noch die Energiekupplungsteile 5 und 6 miteinander in Eingriff. Aus der in Fig. 1 gezeigten Stellung werden bei diesem Ausführungsbeispiel die beiden Hauptkupplungsteile 1 und 2 zunächst einmal in Richtung 24 in die in Fig. 2 gezeigte Verriegelungsstellung geschwenkt, wobei der Bolzen 10 als Drehachse dient. Auch wenn dies ein günstiges Ausführungsbeispiel ist, muss für die Erfindung nicht zwingend vorgesehen sein, dass die beiden Hauptkupplungsteile 1 und 2 mittels einer Schwenkbewegung in die Verriegelungsstellung gebracht werden müssen. Bei entsprechender Ausbildung der Aufnahmeklaue 11 kann durchaus auch vorgesehen sein, dass der erste Hauptkupplungsteil 1 mittels des Armes 3 in einer Linearbewegung auf den. weiteren Hauptkupplungsteil 2 des Aufnahmegerätes 4 aufgeschoben wird.

In der in Fig. 2 gezeigten Verriegelungsstellung ist es nun möglich, die Verriegelungseinrichtung 8 und die Verbindungseinrichtung 9 in ihre jeweilige Schließstellungen zu bringen. Bevor dies erfolgt, sind weder die Energiekupplungsteile 5 und 6 noch der Verriegelungszapfen 12 und die Verriegelungsaufnahme 13 miteinander in Eingriff. Um nun sowohl die mechanische Verriegelung der Hauptkupplungsteile 1 und 2 miteinander vorzunehmen, als auch die Energiekupplungsteile 5 und 6 miteinander zu verbinden, ist nun vorgesehen, dass der gemeinsame Aktuator 7 sowohl die Verriegelungseinrichtung 8 als auch die Verbindungseinrichtung 9 betätigt. Im gezeigten Ausführungsbeispiel führen beide Einrichtungen jeweils eine Linearbewegung aus. Soweit dies die Verriegelungseinrichtung 8 betrifft, wird dabei der Verriegelungszapfen 12 in Richtung 25 in die Verriegelungsaufnahme 13 eingeschoben. Gleichzeitig wird der mit dem Verriegelungszapfen 12 und dem Aktuator 7 zwangsgekoppelte -weil fix daran befestigte - Schiebekeil 20 ebenfalls in Richtung 25 verschoben, wodurch seine Keilfläche 21 an der hier entsprechend keilförmig ausgeführten Führungsfläche 22 entlang geschoben wird. Dies führt dazu, dass die die Führungsfläche 22 tragende Energiekupplungsplatte 16 des ersten Energiekupplungsteiles 5 in Richtung 26 auf die in diesem Ausführungsbeispiel starr am zweiten Hauptkupplungsteil 2 angeordnete zweite Energiekupplungsplatte 17 geschoben wird. Im gezeigten Ausführungsbeispiel sind die Keilflächen 21, 22 in der Art ausgeführt, dass die Bewegungsrichtungen 25 und 26 rechtwinklig zueinander ausgerichtet sind. Dies ist aber nicht zwingend so vorzusehen. Auch andere Winkel zwischen den Bewegungsrichtungen 25 und 26 sind möglich. Es sind auch Ausführungsbeispiele denkbar, bei denen zur Verriegelung der Hauptkupplungsteile 1 und 2 und der Energiekupplungsteile 5 und 6 nicht rein lineare sondern auch rotatorische oder lineare und rotatorische Bewegung zu vollziehen sind.

Wie den Fig. 1 bis 3 zu entnehmen ist, handelt es sich beim Verriegelungszapfen 12 und der Keilfläche 21 des Schiebekeils 20 um zwei separate Bauteile, welche voneinander beabstandet sind, aber wie im hier gezeigten Ausführungsbeispiel realisiert, günstigerweise zwangsgekoppelt ausgeführt sind. Im gezeigten Ausführungsbeispiel wird dies dadurch erreicht, dass sie einstückig an einem gemeinsamen Träger 32 angeordnet sind, sodass sie, wie oben dargelegt, synchron und parallel zueinander vom Aktuator 7 in Richtung 25 und in die Gegenrichtung verschoben werden können. Im Sinn einer möglichst kompakten Bauweise ist es günstig, wenn die Keilfläche 21 und der Verriegelungszapfen 12, wie im gezeigten Ausführungsbeispiel realisiert, in Richtung ihrer gemeinsamen Verschiebung 25 voneinander beabstandet sind. Besonders bevorzugt steht wie in den Fig. 1 bis 3 dargestellt, der Schiebekeil 20 bzw. die Keilfläche 21 in Richtung 25 über den Verriegelungszapfen 12 über. Es ist aber auch eine umgekehrte Anordnung denkbar. Zur Führung der Energiekupplungsplatte 16 in Richtung 26 können zusätzlich zum Führungszapfen 15 noch schienenartige Führungen oder dgl. am ersten Hauptkupplungsteil 1 vorgesehen sein, die eine vorzugsweise lineare Zwangsführung der Eriergiekupplungsplatte 16 bei ihrem Verschieben relativ zum ersten Hauptkupplungsteil 1 in Richtung 26 und/oder in die Gegenrichtung bewirken. Die zweite Energiekupplungsplatte 17 kann fix am zweiten Hauptkupplungsteil 2 angeordnet sein.

Um in dem gezeigten Beispiel das rein lineare Aufeinanderzubewegen der Energiekupplungsteile 5 und 6 bzw. ihrer Energiekupplungsplatten 16 und 17 zu gewährleisten, ist eine Linearführung in Form des Führungszapfens 15 vorgesehen. Dieser sorgt dafür, dass das männliche Energiekupplungselement 19 exakt in das weibliche Energiekupplungselement 18 eindringt, sodass insbesondere bei hydraulischen oder pneumatischen Energiekupplungsteilen ein fluiddichter Sitz erzeugt wird. Das Bezugszeichen 23 zeigt beispielhaft die zu verbindenden Hydraulik bzw. Pneumatikschläuche. Es können anstelle dessen aber natürlich auch elektrische, optische oder sonstige Kabel miteinander zu verbinden sein. An der erfindungsgemäßen Ausführung der Kupplung ändert dies nichts. Auch die Anzahl der miteinander zu verbindenden Energiekupplungselemente 18 und 19 kann variieren. Darüber hinaus können die männlichen und/oder weiblichen Energiekupplungselemente 18, 19 natürlich jeweils an der Energiekupplungsplatte 16 oder an der Energiekupplungsplatte 17 angeordnet sein. Hier sind beliebig viele verschiedene Ausführungen möglich. Wichtig ist nur, dass die männlichen und weiblichen Energiekupplungselemente 18, 19 so angeordnet sind, dass sie durch ein Aufeinanderzubewegen der Energiekupplungsplatten 16 und 17 miteinander in Verbindung bringbar sind. Günstig ist jedenfalls, wenn die Energiekupplungsteile in Form von Steckverbindungen ausgeführt sind, da diese besonders einfach verbindbar sind.

Im gezeigten Ausführungsbeispiel ist der Aktuator 7 in Form einer hydraulischen Kolben-Zylinder-Einheit 14 ausgeführt. Dies muss aber nicht so sein. Der Aktuator 7 kann auch pneumatisch, elektrisch oder auf andere Weise wie z. B. magnetisch angetrieben sein.

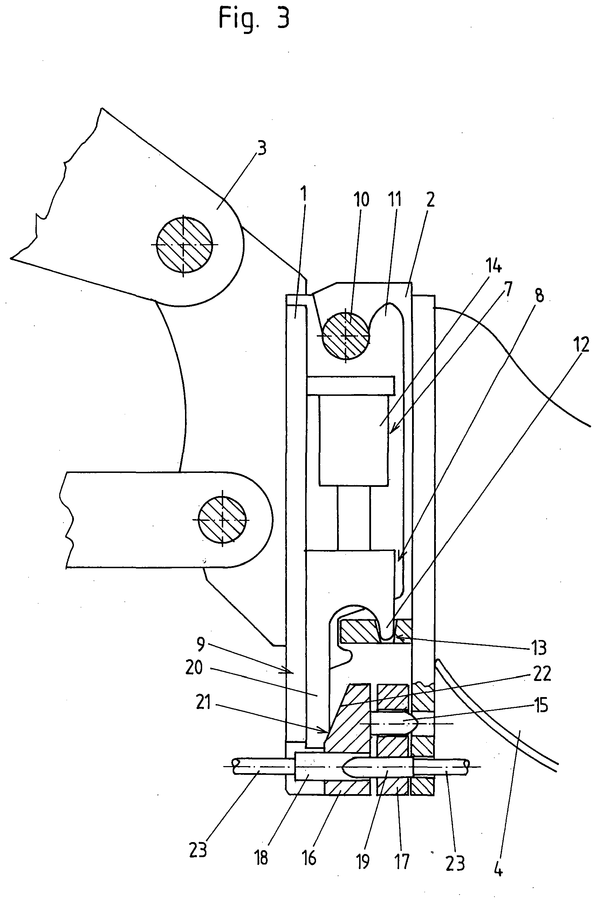

Fig. 3 zeigt die endgültig verriegelte Stellung, in der der Verriegelungszapfen 12 hier formschlüssig in die Verriegelungsaufnahme 13 eingreift, womit eine spielfreie mechanische Verbindung zwischen dem ersten Hauptkupplungsteil 1 und dem weiteren Hauptkupplungsteil 2 sichergestellt ist. In dieser Stellung sind die Energiekupplungsteile 5 und 6 ebenfalls miteinander gekoppelt, wobei die männlichen Energiekupplungselemente 19 gegebenenfalls fluiddicht in den weiblichen Energiekupplungselementen 18 ruhen, womit die Verbindung der beiden Energiekupplungsteile 5 und 6 hergestellt ist.

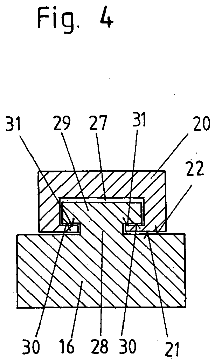

Das Entriegeln und Trennen der Energiekupplungsteile 5 und 6 und der Hauptkupplungsteile 1 und 2 erfolgt in entgegengesetzter Reihenfolge und kann ebenfalls vollständig automatisiert, also ohne zusätzliche Handarbeit ausgeführt werden. Zum Beispiel kann hierzu eine Zwangskopplung der Energiekupplungsplatte 16 mit dem Schiebekeil 20 vorgesehen sein, welche es erlaubt, dass beim Zurückziehen des Schiebekeils 20 entgegen der Richtung 25 die Energiekupplungsplatte 16 zwangsgekoppelt entgegen der Richtung 26 von der Energiekupplungsplatte 17 abgezogen wird. Eine von verschiedenen Möglichkeiten dieser Zwangskopplung ist in Fig. 4 gezeigt. Diese stellt den Schiebekeil 20 und die Energiekupplungsplatte 16 in der Schnittebene AA gemäß Fig. 2 dar. Die Schnittebene AA steht in der gezeigten Darstellung orthogonal auf der Keilfläche 21 des Schiebekeils 20 und der Führungsfläche 22 der Energiekupplungsplatte 16. In diesem Ausführungsbeispiel ist zur Zwangskopplung beim Abziehen der Energiekupplungsplatte 16 von der Energiekupplungsplatte 17 ein in eine hinterschnittene Nut 27 eingreifender Kopf 29 vorgesehen. Die Schultern 30 dieses Kopfes 29 liegen an Gleitflächen 31 der hinterschnittenen Nut 27 an. Die Schultern 30, wie auch die Gleitflächen 31 verlaufen günstigerweise parallel zur Keilfläche 21 und zur Führungsfläche 22, sodass der Kopf 29 in der hinterschnittenen Nut 27 parallel zur Keilfläche 21 und zur Führungsfläche 22 verschoben werden kann. Im gezeigten Ausführungsbeispiel ist die hinterschnittene Nut 27 in den Schiebekeil 20 eingefräst, und der Kopf 29 über den Hals 28 an der Energiekupplungsplatte 16 befestigt bzw. einstückig angeformt. Dies muss aber nicht so sein, es ist genauso gut möglich, einen entsprechenden Kopf mit Hals am Schiebekeil 20 vorzusehen, und die hinterschnittene Nut in der Energiekupplungsplatte 16 anzuordnen.

Durch diese Anordnung wird gewährleistet, dass durch Zusammenwirken der Schulter 30 und der Gleitflächen 31, die Energiekupplungsplatte 16 von der Energiekupplungsplatte 17 abgezogen wird, sobald der Schiebekeil 20 entgegen der Richtung 25 zurückgezogen wird. Dies führt zum Trennen der weiblichen und männlichen Energiekupplungselemente 18 und 19. Wie bereits ausgeführt, ist dies aber nur eine Möglichkeit zur Trennung der Energiekupplungselemente 18 und 19. Es ist genauso gut möglich, die Energiekupplungsplatten 16 und 17 mittels anderer Maßnahmen wieder voneinander zu trennen. Hierfür könnten z.B. entsprechend hydraulisch oder elektrisch angetriebene Stifte in einer der Energiekupplungsplatten 16 oder 17 vorgesehen sein, die bei entsprechender Betätigung die Energiekupplungsplatten 16 und 17 voneinander weg schieben und damit trennen.

Im gezeigten Ausführungsbeispiel ist der Aktuator 7 am ersten Hauptkupplungsteil 1 und damit am Arm 3 der Arbeitsmaschine angeordnet. Dies ist günstig, da in der Regel die Energieversorgung von der Arbeitsmaschine über den Arm 3 geliefert wird. Trotzdem ist die Erfindung nicht auf diese Variante eingeschränkt. Die Frage, welche der Bauteile nun am Anbaugerät 4 und welche am Arm 3 bzw. an der Arbeitsmaschine selbst anzuordnen sind, unterliegt vielmehr dem Belieben des Fachmanns. Alternative Anordnungen können insbesondere dann interessant werden, wenn die Energieversorgung nicht mehr über die Arbeitsmaschine, sondern über eine anderweitige Energiequelle erfolgt.

Grundsätzlich ist die Erfindung weder auf bestimmte Typen von Arbeitsmaschinen noch auf bestimmte Anbaugeräte beschränkt. Insbesondere ist aber die Verwendung bei schweren Arbeitsmaschinen, wie Baggern, Raupen oder Landwirtschaftsgeräten vorgesehen, an denen Anbaugeräte wie Baggerschaufeln bzw. -löffel, Greifer, Hammer, Rüttelplatten u. dgl zu befestigen sind.

### Legende

### zu den Hinweisziffern:

- 1: erster Hauptkupplungsteil
- 2: weiterer Hauptkupplungsteil
- 3: Arm der Arbeitsmaschine
- 4: Anbaugerät
- 5: erster Energiekupplungsteil
- 6: weiterer Energiekupplungsteil
- 7: Aktuator
- 8: Verriegelungseinrichtung
- 9: Verbindungseinrichtung
- 10: Bolzen
- 11: Aufnahmeklaue
- 12: Verriegelungszapfen
- 13: Verriegelungsaufnahme
- 14: Kolben-Zylinder-Einheit
- 15: Führungszapfen
- 16: Energiekupplungsplatte
- 17: Energiekupplungsplatte
- 18: weibliches Energiekupplungselement
- 19: männliches Energiekupplungselement
- 20: Schiebekeil
- 21: Keilfläche
- 22: Führungsfläche
- 23: Energieversorgungsschlauch
- 24: Schwenkrichtung
- 25: Verriegelungsrichtung
- 26: Verbindungsrichtung
- 27: hinterschnittene Nut
- 28: Hals
- 29: Kopf
- 30: Schulter
- 31: Gleitfläche

## Patentansprüche

1. Kupplung für Arbeitsmaschinen mit einem ersten Hauptkupplungsteil (1) und zumindest einem weiteren Hauptkupplungsteil (2) zur mechanischen Befestigung eines Anbaugerätes (4) an der Arbeitsmaschine, wobei für eine Energieversorgung des Anbaugerätes (4) am ersten Hauptkupplungsteil (1) ein erster Energiekupplungsteil (5) und am weiteren Hauptkupplungsteil (2) zumindest ein weiterer Energiekupplungsteil (6) vorgesehen ist und an einem der Hauptkupplungsteile (1, 2) ein Aktuator (7) angeordnet ist, welcher zur Betätigung einer Verriegelungseinrichtung (8) zur Verriegelung der beiden Hauptkupplungsteile (1, 2) miteinander vorgesehen ist, wobei eine Verbindungseinrichtung (9) zum automatisierten Verbinden der Energiekupplungsteile (5, 6) vorgesehen ist und die Verbindungseinrichtung (9) für die Energiekupplungsteile (5, 6) zumindest einen, vorzugsweise linear verschiebbaren, Schiebekeil (20) aufweist, welcher mit einer Keilfläche (21) die Energiekupplungsteile (5, 6) zum Verbinden aufeinanderschiebt, wobei die Energiekupplungsteile (5, 6) jeweils zumindest eine Energiekupplungsplatte (16,17) aufweisen, wobei an den Energiekupplungsplatten (16, 17) jeweils miteinander in Eingriff bringbare weibliche und männliche Energiekupplungselemente (18, 19) angeordnet sind, **dadurch gekennzeichnet, dass** die Keilfläche (21) des Schiebekeils (20) auf eine keilförmig ausgeführte Führungsfläche (22) der Energiekupplungsplatte (16) des ersten Energiekupplungsteiles (5) wirkt und die Energiekupplungsplatte (16) relativ zum ersten Hauptkupplungsteil (1) verschiebt.

2. Kupplung nach Anspruch 1, **dadurch gekennzeichnet, dass** die Verbindungseinrichtung (9) für die Energiekupplungsteile (5, 6) vom Aktuator (7) zur Betätigung der Verriegelungseinrichtung (8) betätigbar ist.

3. Kupplung nach Anspruch 1 oder 2, **dadurch gekennzeichnet, dass** die Hauptkupplungsteile (1, 2) um eine Schwenkachse in eine Verriegelungsstellung aufeinander zu schwenkbar sind, wobei die Hauptkupplungsteile (1, 2) in der Verriegelungsstellung mittels der Verriegelungseinrichtung (9) miteinander verriegelbar sind.

4. Kupplung nach Anspruch 3, **dadurch gekennzeichnet, dass** eines der Hauptkupplungsteile (1) zumindest einen Bolzen (10) und das andere der Hauptkupplungsteile (2) eine zum Bolzen (10) korrespondierende Aufnahmeklaue (11) aufweist, wobei bei Lagerung des Bolzens (10) in der Aufnahmeklaue (11) die Hauptkupplungsteile (1, 2) mit dem Bolzen (10) als Schwenkachse in die Verriegelungsstellung aufeinander zu schwenkbar sind.

5. Kupplung nach einem der Ansprüche 1 bis 4, **dadurch gekennzeichnet, dass** die Verriegelungseinrichtung (9) einen vom Aktuator (7), vorzugsweise linear, bewegbaren Verriegelungszapfen (12) aufweist, welcher an einem der Hauptkupplungsteile (1) angeordnet ist und mit einem am anderen Hauptkupplungsteil (2) angeordneten Verriegelungselement in, vorzugsweise formschlüssigen, Eingriff bringbar ist.

6. Kupplung nach Anspruch 5, **dadurch gekennzeichnet, dass** das Verriegelungselement eine Verriegelungsaufnahme (13) ist, in die der Verriegelungszapfen (12) einführbar ist.

7. Kupplung nach einem der Ansprüche 1 bis 6, **dadurch gekennzeichnet, dass** der Aktuator (7) zumindest eine hydraulisch oder pneumatisch betätigbare Kolben-Zylinder-Einheit (14) aufweist.

8. Kupplung nach einem der Ansprüche 1 bis 7, **dadurch gekennzeichnet, dass** der Aktuator (7) einen elektrischen Antrieb aufweist.

9. Kupplung nach einem der Ansprüche 1 bis 8, **dadurch gekennzeichnet, dass** eine Führung vorgesehen ist, die sicherstellt, dass die Energiekupplungsteile (5, 6) linear aufeinander zu bewegbar gelagert sind.

10. Kupplung nach Anspruch 9, **dadurch gekennzeichnet, dass** zumindest ein, vorzugsweise zumindest bereichsweise konischer, Führungszapfen (15) zur Zentrierung der Energiekupplungsteile (5, 6) miteinander vorgesehen ist.

11. Kupplung nach einem der Ansprüche 1 bis 10, **dadurch gekennzeichnet, dass** die Energiekupplungsteile (5, 6) Steckverbindungen aufweisen.

12. Kupplung nach einem der Ansprüche 1 bis 11, **dadurch gekennzeichnet, dass** mit den Energiekupplungsteilen (5, 6) elektrische und/oder pneumatische und/oder hydraulische Verbindungen herstellbar sind.

13. Kupplung nach einem der Ansprüche 1 bis 12, **dadurch gekennzeichnet, dass** die Hauptkupplungsteile (1, 2) am Anbaugerät (4) und/oder an der Arbeitsmaschine auswechselbar befestigbar sind.

14. Arbeitsmaschine mit einer Kupplung nach einem der Ansprüche 1 bis 13.

## Claims

1. Coupling for work machines with a first main coupling part (1) and at least one further main coupling part (2) for the mechanical fixing of an attachment (4) to the work machine, whereby a first energy coupling part (5) is provided for an energy supply of the attachment (4) on the first main coupling part (1) and at least one further energy coupling part (6) is provided on the further main coupling part (2) and an actuator (7) that is provided for the actuation of a locking device (8) for locking the two main coupling parts (1, 2) with each other is placed on one of the main coupling parts (1, 2), whereby a connecting device (9) is provided for the automated connection of the energy coupling parts (5, 6) and the connecting device (9) for the energy coupling parts (5, 6) has at least one preferably linearly movable sliding wedge (20) that slides with a wedge surface (21) the energy coupling parts (5, 6) closer to each other, whereby the energy coupling parts (5, 6) have respectively at least one energy coupling plate (16, 17), whereby female and male energy coupling elements (18, 19) that are able to respectively mesh with each other are placed on the energy coupling plates (16, 17), **characterized in that** the wedge surface (21) of the sliding wedge (20) acts onto a wedge-shaped guiding surface (22) of the energy coupling plate (16) of the first energy coupling part (5) and moves the energy coupling plate (16) relatively to the first main coupling part (1).

2. Coupling according to claim 1, **characterized in that** the connecting device (9) for the energy coupling parts (5, 6) can be actuated by the actuator (7) for actuating the locking device (8).

3. Coupling according to claim 1 or 2, **characterized in that** the main coupling parts (1, 2) can be pivoted around a pivot axis closer to each other into a locking position, whereby the main coupling parts (1, 2) can be locked with each other in the locking position by means of the locking device (9).

4. Coupling according to claim 3, **characterized in that** one of the main coupling parts (1) has at least one bolt (10) and the other of the main coupling parts (2) has a pick-up claw (11) corresponding to the bolt (10), whereby, when the bolt (10) is mounted in the pick-up claw (11), the main coupling parts (1, 2) can be pivoted closer to each other into the locking position with the bolt (10) as pivot axis.

5. Coupling according to one of the claims 1 to 4, **characterized in that** the locking device (9) has a locking pin (12) that can preferably be linearly moved by the actuator (7), which pin is placed on one of the main coupling parts (1) and which is able to mesh, preferably by positively locking, with a locking element placed on the other main coupling part (2).

6. Coupling according to claim 5, **characterized in that** the locking element is a locking receptacle (13) into which the locking pin (12) can be introduced.

7. Coupling according to one of the claims 1 to 6, **characterized in that** the actuator (7) has at least one hydraulically or pneumatically operable piston-cylinder unit (14).

8. Coupling according to one of the claims 1 to 7, **characterized in that** the actuator (7) has an electrical drive.

9. Coupling according to one of the claims 1 to 8, **characterized in that** a guide is provided that ensures that the energy coupling parts (5, 6) are positioned linearly movable towards each other.

10. Coupling according to claim 9, **characterized in that** at least one preferably at least in sections conical guiding pin (15) is provided for centering the energy coupling parts (5, 6) with each other.

11. Coupling according to one of the claims 1 to 10, **characterized in that** the energy coupling parts (5, 6) have push-in connections.

12. Coupling according to one of the claims 1 to 11, **characterized in that** electrical and/or pneumatic and/or hydraulic connections can be produced with the energy coupling parts (5, 6).

13. Coupling according to one of the claims 1 to 12, **characterized in that** the main coupling parts (1, 2) can be fixed to the attachment (4) and/or to the work machine so as to be exchangeable.

14. Work machine with a coupling according to one of the claims 1 to 13.

## Revendications

1. Couplage pour machines de travail avec une première partie de couplage principal (1) et au moins une autre partie de couplage principal (2) pour la fixation mécanique d'un équipement (4) à la machine de travail, cependant qu'il est prévu, pour une alimentation en énergie de l'équipement (4), une première partie de couplage d'énergie (5) sur la première partie de couplage principal (1) et au moins une autre partie de couplage d'énergie (6) sur l'autre partie de couplage principal (2) et qu'un actionneur (7) qui est prévu pour l'actionnement d'un dispositif de verrouillage (8) pour le verrouillage des deux parties de couplage principal (1,2) l'une avec l'autre est placé sur l'une des parties de couplage principal (1, 2), cependant qu'un dispositif de liaison (9) est prévu pour la liaison automatisée des parties de couplage d'énergie (5, 6) et que le dispositif de liaison (9) pour les parties de couplage d'énergie (5, 6) présente au moins une cale coulissante (20), de préférence à déplacement linéaire, qui rapproche par coulissement les parties de couplage d'énergie (5, 6) avec une surface cunéiforme (21) pour les relier, cependant que les parties de couplage d'énergie (5, 6) présentent respectivement au moins une plaque de couplage d'énergie (16, 17), cependant que des éléments de couplage d'énergie mâles et femelles (18, 19) qui peuvent respectivement venir en prise l'un avec l'autre sont placés sur les plaques de couplage d'énergie (16, 17), **caractérisé en ce que** la surface cunéiforme (21) de la cale coulissante (20) agit sur une surface de guidage réalisée cunéiforme (22) de la plaque de couplage d'énergie (16) de la première partie de couplage d'énergie (5) et déplace la plaque de couplage d'énergie (16) par rapport à la première partie de couplage principal (1).

2. Couplage selon la revendication 1, **caractérisé en ce que** le dispositif de liaison (9) pour les parties de couplage d'énergie (5, 6) peut être actionné par l'actionneur (7) pour actionner le dispositif de verrouillage (8).

3. Couplage selon la revendication 1 ou 2, **caractérisé en ce que** les parties de couplage principal (1, 2) peuvent pivoter l'une vers l'autre autour d'un axe de pivotement dans une position de verrouillage, cependant que les parties de couplage principal (1,2) peuvent être verrouillées l'une avec l'autre dans la position de verrouillage au moyen du dispositif de verrouillage (9).

4. Couplage selon la revendication 3, **caractérisé en ce que** l'une des parties de couplage principal (1) présente au moins un boulon (10) et l'autre des parties de couplage principal (2) présente une mâchoire de logement (11) qui correspond au boulon (10), cependant que, lors du stockage du boulon (10) dans la mâchoire de logement (11), les parties de couplage principal (1,2) peuvent pivoter en se rapprochant l'une de l'autre dans la position de verrouillage avec le boulon (10) comme axe de pivotement.

5. Couplage selon l'une des revendications 1 à 4, **caractérisé en ce que** le dispositif de verrouillage (9) présente un tourillon de verrouillage (12), de préférence mobile linéairement, qui est placé sur l'une des parties de couplage principal (1) et qui peut venir en prise, de préférence par complémentarité de forme, avec un élément de verrouillage placé sur l'autre partie de couplage principal (2).

6. Couplage selon la revendication 5, **caractérisé en ce que** l'élément de verrouillage est un logement de verrouillage (13) dans lequel le tourillon de verrouillage (12) peut être introduit.

7. Couplage selon l'une des revendications 1 à 6, **caractérisé en ce que** l'actionneur (7) présente au moins une unité piston/cylindre (14) qui peut être actionnée de manière hydraulique ou pneumatique.

8. Couplage selon l'une des revendications 1 à 7, **caractérisé en ce que** l'actionneur (7) présente un entraînement électrique.

9. Couplage selon l'une des revendications 1 à 8, **caractérisé en ce qu'**il est prévu un guidage qui assure que les parties de couplage d'énergie (5, 6) sont montées en étant mobiles linéairement en se rapprochant l'une de l'autre.

10. Couplage selon la revendication 9, **caractérisé en ce qu'**il est prévu au moins un tourillon de guidage (15), de préférence conique au moins par zones, pour le centrage des parties de couplage d'énergie (5, 6) l'une avec l'autre.

11. Couplage selon l'une des revendications 1 à 10, **caractérisé en ce que** les parties de couplage d'énergie (5, 6) présentent des connexions enfichables.

12. Couplage selon l'une des revendications 1 à 11, **caractérisé en ce que** des connexions électriques et/ou pneumatiques et/ou hydrauliques peuvent être réalisées avec les parties de couplage d'énergie (5, 6).

13. Couplage selon l'une des revendications 1 à 10, **caractérisé en ce que** les parties de couplage principal (1, 2) peuvent être fixées interchangeables sur l'équipement (4) et/ou sur la machine de travail.

14. Machine de travail avec un couplage selon l'une des revendications 1 à 13.
